(19) Europäisches Patentamt
European Patent Office
Office européen des brevets

(11) **EP 4 496 020 A1**

(12) **EUROPEAN PATENT APPLICATION**

(43) Date of publication:
**22.01.2025 Bulletin 2025/04**

(21) Application number: **24159345.8**

(22) Date of filing: **23.02.2024**

(51) International Patent Classification (IPC):
*H01M 4/04* (2006.01)    *H01M 4/131* (2010.01)
*H01M 4/1391* (2010.01)    *H01M 4/485* (2010.01)
*H01M 4/62* (2006.01)    *H01M 10/0525* (2010.01)
*H01M 10/0567* (2010.01)    *H01M 10/44* (2006.01)

(52) Cooperative Patent Classification (CPC):
**H01M 4/131; H01M 4/0471; H01M 4/1391;
H01M 4/485; H01M 4/628; H01M 10/0525;
H01M 10/0567; H01M 10/446;** H01M 2300/0037

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023 JP 2023119277**

(71) Applicant: **Kabushiki Kaisha Toshiba
Tokyo 105-0023 (JP)**

(72) Inventors:
• **Murata, Yoshiaki
Tokyo, 105-0023 (JP)**
• **Ise, Kazuki
Tokyo, 105-0023 (JP)**
• **Yamashita, Yasunobu
Tokyo, 105-0023 (JP)**
• **Ueda, Kakuya
Tokyo, 105-0023 (JP)**
• **Hoshina, Keigo
Tokyo, 105-0023 (JP)**
• **Harada, Yasuhiro
Tokyo, 105-0023 (JP)**
• **Takami, Norio
Tokyo, 105-0023 (JP)**

(74) Representative: **Hoffmann Eitle
Patent- und Rechtsanwälte PartmbB
Arabellastraße 30
81925 München (DE)**

(54) **PRODUCTION METHOD OF SECONDARY BATTERY, SECONDARY BATTERY, BATTERY PACK, AND VEHICLE**

(57)    According to one approach, a production method of a secondary battery is provided. The method includes preparing a secondary battery precursor (100) including a positive electrode (5), a negative electrode (3), and an electrolyte, adjusting a negative electrode potential of the negative electrode (3) to a range of 0.6 V or more and less than 1.5 V based on oxidation-reduction potential of lithium, thereby providing a potential adjusted state, and holding the potential adjusted state at a temperature in a range of greater than 60°C and 82°C or less.

F I G. 1

EP 4 496 020 A1

**Description**

FIELD

Approaches relate to a production method of a secondary battery, a secondary battery, a battery pack, and a vehicle.

BACKGROUND

Recently, progress in research and development have been active for secondary batteries such as a nonaqueous electrolyte secondary battery like a lithium ion secondary battery, as a high energy-density battery. The secondary batteries, such as a nonaqueous electrolyte secondary battery, are anticipated as a power source for vehicles such as hybrid electric automobiles and electric automobiles, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge and discharge, electrons and lithium ions must be able to migrate rapidly between the positive electrode and the negative electrode. However, when a battery using a carbon-based negative electrode is repeatedly subjected to rapid charge and discharge, precipitation of dendrites of metallic lithium on the electrode may sometimes occur, raising concern of heat generation or ignition due to internal short circuits.

In light of this, a battery using a metal composite oxide in a negative electrode in place of a carbonaceous material has been developed. With an oxide negative electrode, by completely suppressing lithium deposition by virtue of its high operation potential, significantly high safety is ensured. In particular, in a battery using an oxide of titanium in the negative electrode, rapid charge and discharge can be stably performed. Such a battery also has a longer life than in the case of using a carbon-based negative electrode.

For example, a spinel lithium-titanium oxide such as

$Li_4Ti_5O_{12}$ (TLO) is known as a zero-strain material that does not undergo volume expansion and contraction during Li insertion and extraction reactions. However, the theoretical capacity of TLO is approximately 180 mAh/g, and the energy density is low. A niobium-titanium oxide such as $Nb_2TiO_7$ (TNO) has a higher charge-discharge capacity than TLO and a higher input performance (charge performance) than TLO. However, the output performance of TNO tends to be equal to or slightly inferior to that of TLO. Furthermore, since TNO undergoes volume change in association with Li insertion and extraction during charge-and-discharge, TLO is superior in terms of cycle life performance. Specifically, the volume change causes cracking of active material particles containing TNO, which breaks the electron conduction path within the negative electrode and reduces the proportion of the portions of the negative electrode participating in charge-and-discharge. Furthermore, since the cracking causes the active surfaces of the active material particles to increase, side reactions between the active material and the electrolyte is promoted. Thus, formation of a coating on the negative electrode that inhibits movement of lithium ions through decomposition of the electrolyte is accelerated, and the internal resistance increases.

BRIEF DESCRIPTION OF THE DRAWINGS

FIG. 1 is a cross-sectional view schematically showing an example of a secondary battery precursor according to an approach.

FIG. 2 is an enlarged cross-sectional view of section A of the secondary battery precursor shown in FIG. 1.

FIG. 3 is a partially cut-out perspective view schematically showing another example of the secondary battery precursor according to an approach.

FIG. 4 is an enlarged cross-sectional view of section B of the secondary battery precursor shown in FIG. 3.

FIG. 5 is a cross-sectional view schematically illustrating yet another example of the secondary battery precursor according to the approach.

FIG. 6 is a schematic cross-sectional view along line VI-VI of the secondary battery precursor shown in FIG. 5.

FIG. 7 is a perspective view schematically showing an example of a battery module according to an approach.

FIG. 8 is an exploded perspective view schematically showing an example of a battery pack according to an approach.

FIG. 9 is a block diagram showing an example of an electric circuit of the battery pack shown in FIG. 8.

FIG. 10 is a partially see-through diagram schematically showing an example of a vehicle according to an approach.

FIG. 11 is a diagram schematically showing an example of a control system related to an electric system in the vehicle according to an approach.

DETAILED DESCRIPTION

According to one approach, a production method of a secondary battery is provided. The method includes preparing a secondary battery precursor including a positive electrode, a negative electrode, and an electrolyte, adjusting a negative electrode potential of the negative electrode to a range of 0.6 V or more and less than 1.5 V based on oxidation-reduction potential of lithium, thereby providing a potential adjusted state, and holding the potential adjusted state at a temperature in a range of greater than 60°C and 82°C or less.

According to another approach, a secondary battery, which is produced by the production method according to the above approach, is provided.

According to a further other approach, provided is a battery pack including the secondary battery according to the above approach.

According to still another approach, provided is a vehicle including the battery pack according to the above approach.

The above approaches provide a secondary battery and battery pack with high output performance and durability, a vehicle and stationary power supply including the battery pack, and a method of producing the secondary battery.

Hereinafter, approaches will be described with reference to the drawings. The same reference signs are applied to common components throughout the approaches and overlapped explanations are thereby omitted. Each drawing is a schematic view for promoting explanations of the approach and understanding thereof, and thus there are some details in which a shape, a size and a ratio are different from those in a device actually used, but they can be appropriately design-changed, taking the following explanations and known technology into consideration.

As a binder to be contained in the electrode, carboxymethyl cellulose (CMC) and styrene-butadiene rubber (SBR) are known. CMC is also utilized as a thickener in an electrode fabrication slurry. CMC has been reported to function not only for binding electrode members and as a slurry thickener, but to also exhibit functions of conformability to an electrode active material and a side reaction preventing effect. Applying an aqueous slurry containing CMC, SBR or the like as a binder to the TNO negative electrode drastically improves cycle performance of the obtained battery. Specifically, since CMC and SBR exhibit high resilience, they can comply to some extent when TNO contracts.

As described above, in order to suppress a relatively large volume change of the niobium-titanium oxide in association with charge-and-discharge, it is effective to use a binder that is soluble or dispersible in water such as CMC or SBR. However, when an aqueous slurry is used, gas generation during storage of the battery and the like becomes significant. As a result of extensive investigation and research, the present inventors have found that when an aqueous slurry is prepared using such an oxide negative electrode, water molecules are adsorbed onto surface defects of the electrode active material. Furthermore, when the active material particles are made to be fine particles for the purpose of enhancing the performance of the negative electrode, complete removal of moisture through preliminary drying treatment is difficult. For example, since moisture bonded to the TNO surface defect in the -OH state is hardly volatile, drying at a temperature within the heat-resistant range of the binder is not possible.

When moisture is included in a nonaqueous electrolyte secondary battery, gas generation derived from the moisture may occur during operation of the battery. Examples of the gas derived from moisture include hydrogen and oxygen. When a large amount of gas is generated in the battery, battery swelling occurs. In addition, when gas is present on the surface of an electrode active material, that portion does not get into contact with the nonaqueous electrolyte, and therefore the electrode reaction field is reduced. As a result, the current load at the remaining electrode interface increases, and thus the battery resistance increases.

As a means for preventing gas generation derived from residual moisture from occurring during use of the battery, charge-and-discharge and aging treatments are performed in advance during the production of the battery, and the resultant gas generated is removed. For example, the battery container is temporarily sealed, is charged to a predetermined charge state (State Of Charge: SOC), is subjected to aging of holding in the charged state under a specified temperature environment for a certain period of time, then the temporary sealing is opened under a vacuum environment to release the gas generated during aging, then resealed fully.

(First Approach)

According to a first approach, a method for producing a secondary battery is provided. The production method includes preparing a secondary battery precursor, providing a potential adjusted state, and holding the potential adjusted state at a temperature in a range of greater than 60°C and 82°C or less. The secondary battery precursor includes a positive electrode, a negative electrode, and an electrolyte. The potential adjusted state is achieved by adjusting a negative electrode potential of the negative electrode to a range of 0.6 V or more and less than 1.5 V, taking an oxidation-reduction potential of lithium as standard.

In the production method, the treatment of holding the secondary battery precursor in the potential adjusted state at the above-described temperature corresponds to so-called aging. Performing aging under the above-described conditions can eliminate water-derived gas generation in the form of electrolysis of water or reductive decomposition of water and an organic solvent. By setting the potential of the negative electrode to a certain level or less to promote water decomposition, thereby generating gas in advance and then performing degassing, gas generated later during storage is reduced. A part of the decomposition reaction of water when propylene carbonate (PC) is contained as an organic solvent of the electrolyte is shown below.

$$Li^+ + H_2O + e^- \rightarrow H_2 + LiOH$$

$$H_2O + PC + e^- \rightarrow CO_2 + Li_2CO_3 + R\text{-}OH$$

Therefore, according to the production method, a secondary battery that exhibits high output performance and that is excellent in life performance can be produced.

The step of adjusting the negative electrode potential to the above range to obtain the potential adjusted state, and the step of holding the potential adjusted state at the holding temperature may be collectively referred to as "pretreatment" for the secondary battery to be produced. This pretreatment generates gas in advance in the production stage of the secondary battery, thereby reducing an amount of gas that may be generated when the battery is used. The gas generated in advance by the pretreatment is removed before the secondary battery production is completed.

The secondary battery precursor adjusted to the potential adjusted state is held at a holding temperature of higher than 60°C and 82 °C or less. Setting the holding temperature to higher than 60 °C can promote reaction of the generating gas in advance, exemplified above. Thereby, the effect can be obtained within practical aging time. Setting the holding temperature to 82°C or less can suppress reactions that generate undesired by-products such as hydrogen fluoride (HF). HF is, for example, generated through a side reaction between an anion of a fluorine-containing electrolyte salt such as $PF_6^-$ and water under high temperature conditions, and is not preferable because HF attacks the positive electrode and deteriorates the battery performance. The holding temperature is more preferably 65°C to 81°C, further more preferably 70°C to 80°C.

With regard to a carbon-based negative electrode for which the operating potential is close to the oxidation-reduction potential of metallic lithium (0 V vs. Li/Li$^+$), a solid electrolyte interlayer (SEI) film exhibiting functions of protecting the negative electrode is known to form. The main component of the SEI film formed on the carbon-based negative electrode is an electrolyte-derived alkoxide decomposition product, and the component is thermally decomposable and decomposes at 60°C or more. Therefore, holding the potential adjusted state at a temperature exceeding 60°C is more desirably applied to a battery using an oxide-based negative electrode, rather than to a battery using a carbon-based negative electrode. More specifically, a compound that is electrochemically stable within a range of 0.6 V or more and less than 1.5 V with respect to the oxidation-reduction potential of lithium (vs. Li/Li$^+$) is desirably used as the negative electrode active material. With the negative electrode of this potential range, little of the thermally decomposable coating is formed, and therefore, the performance can be maintained even if the temperature exceeds 60°C. The potential adjustment range is more preferably 0.8 V to 1.4 V (vs. Li/Li$^+$), further more preferably 1 V to 1.3 V (vs. Li/Li$^+$).

The potential adjusted state is preferably held for 3 hours or longer. In view of practicality, the holding time may be, for example, limited to 72 hours or less. The holding time is more preferably 6 hours to 48 hours, further more preferably 18 hours to 36 hours.

The secondary battery precursor includes a positive electrode, a negative electrode, and an electrolyte. Respective details of the positive electrode, negative electrode, and electrolyte will be described later. The secondary battery precursor may further include a separator disposed between the positive electrode and the negative electrode. The negative electrode, positive electrode, and separator may configure an electrode group. The electrolyte may be held in the electrode group.

In addition, the secondary battery precursor may further include a container member housing the electrode group and the electrolyte.

Furthermore, the secondary battery precursor may further include a negative electrode terminal electrically connected to the negative electrode and a positive electrode terminal electrically connected to the positive electrode.

The secondary battery precursor can be prepared, for example, by housing a positive electrode, a negative electrode, and an electrolyte in a container member. A method of fabricating the positive electrode, a method of fabricating the negative electrode, and a method of preparing the electrolyte will be described later. The preparation of the secondary battery precursor is desirably carried out under an inert atmosphere. Adopting an inert atmosphere can avoid potential gas sources like oxygen and carbon dioxide. Fabrication of the positive and negative electrodes and adjustment of the electrolyte are also desirably carried out in an inert atmosphere. Examples of the inert atmosphere include an argon atmosphere.

A mode of the electrode group is not particularly limited, and the electrode group may have, for example, a wound structure or a stacked structure.

The electrode group having a wound structure can be fabricated, for example, as follows. The positive electrode and the negative electrode are stacked with the separator interposed therebetween to obtain a stack of the positive electrode, the negative electrode, and the separator. The stack is wound, and then the obtained wound body is further pressed, whereby a flat-shaped wound electrode group can be fabricated.

The electrode group having a stacked structure can be fabricated, for example, by stacking positive electrodes, negative electrodes, and separator(s) such that the separator (s) is interposed between the positive electrode and the negative electrode. Herein, plural separators may be arranged between the positive electrodes and the negative electrodes, or one separator may be folded, for example, in zigzag, and the positive electrodes and the negative electrodes may be alternately arranged in spaces formed by fold-backs of the separator.

The electrode group and an electrolyte are placed in a container member, and temporary sealing is performed to produce a secondary battery precursor. Although details will be described later, for example, a container including a laminate film or a metal container may be used as the container member. Details of the container member will be described later.

When using a container member made of a laminate film, temporary sealing can be performed by, for example, closing an opening by thermal fusion. In temporary sealing, for example, a position further outward from a position where full sealing is to be performed for the secondary battery as a finished product (a position closer to the end of the opening) is closed by thermal fusion.

When the metal container is used as the container member, temporary sealing can be performed, for example, by closing an inlet for introducing the electrolyte, provided outside the container, with a sealing plug. The inlet can be provided, for example, in a lid body of the metal container such as a sealing plate. For example, a liquid electrolyte is put into the metal container through the inlet, and then a rubber plug is attached to the inlet to perform temporary sealing.

The mode of performing temporary sealing is not limited to the above example.

The electrode group is desirably dried before carrying out temporary sealing. As described above, in order to suppress a volume change of the niobium-titanium oxide or the like during charge and discharge, a binder soluble or dispersible in water such as CMC or SBR is preferably used in the negative electrode; however, in that case, the amount of residual water may become great. Furthermore, drying is also difficult when water is adsorbed onto an electrode using fine active material particles, and the amount of residual water may be increased. Specifically, even after drying is performed, the water content measured by Karl Fischer moisture measurement at 200°C may be 250 ppm or more. Even when there is a large amount of residual water at this time, moisture is gasified in pretreatment where the negative electrode potential of 0.6 V or more and less than 1.5 V (vs. Li/Li$^+$), which is equal to or less than the decomposition potential of water, is held at a temperature exceeding 60°C, and then released outside the container member. That is, since water can be removed by high-temperature aging that can be easily carried out for a high potential negative electrode such as an oxide-based negative electrode, a large amount of residual water before aging can be tolerated.

The Karl Fischer moisture measurement can be performed in the following manner. An electrode sample containing moisture is first supplied to a thermal vaporizer that uses a nitrogen stream. The thermal vaporizer is preheated to 200°C in advance, and a nitrogen stream is introduced into a measuring chamber of a Karl Fischer moisture analyzer. The measurement is continuously performed until the amount of moisture detected reaches an amount that allows detection of background or for a maximum of 5 minutes.

Adjustment of the negative electrode potential to the potential adjusted state can be performed by, for example, subjecting the temporarily sealed secondary battery precursor to initial charge-and-discharge. Charge-and-discharge is performed so that an appropriate state of charge is obtained, so as to bring the potential of the negative electrode into the above-mentioned potential range in the potential adjusted state. The state of charge can be adjusted based on, for example, the battery voltage. Initial charge-and-discharge is performed to an appropriate state of charge according to the active material used for the negative electrode and the design of the negative electrode, to thereby bring the secondary battery precursor into the potential adjusted state. The secondary battery precursor may be brought into the potential adjusted state by initial charge, or the secondary battery precursor may be brought into the potential adjusted state, for example, by initial discharge after initial charge to a full charge state (SOC 100%) .

Alternatively, before assembling the secondary battery precursor, a potential adjusted state can be obtained by performing charge-and-discharge for the negative electrode, independently. For example, a negative electrode and a counter electrode made of lithium metal may be used to assemble a battery (e.g., a half cell), whereby the negative electrode potential can be adjusted. The negative electrode with the potential adjusted is used to produce a secondary battery precursor, whereby a secondary battery precursor in a potential adjusted state can be provided. For example, by charging a negative electrode using a titanium-containing oxide for a negative electrode active material to a capacity of 10 mAhg$^{-1}$ or more in terms of the weight ratio of the titanium-containing oxide, the negative electrode potential can be adjusted to a negative electrode potential in the range of 0.6 V or more and less than 1.5 V (vs. Li/Li$^+$).

In the potential adjusted state, the positive electrode potential of the positive electrode is preferably adjusted in a range exceeding 3.9 V with respect to the oxidation-reduction potential of lithium. When aging is performed in a state where the positive electrode potential is 3.9 V (vs. Li/Li$^+$), lithium carbonate adsorbed onto the positive electrode can be removed through electrolysis or thermal reaction. Adjustment of the positive electrode potential can be performed in a similar manner as the adjustment of the negative electrode potential to the potential adjusted state.

Charge-and-discharge for obtaining the potential adjusted state is performed, for example, at room temperature (for example, about 25°C) .

The potential adjusted state obtained is held at a temperature exceeding 60°C and 82°C or less. For example, the secondary battery precursor adjusted to the potential adjusted state is placed in the thermostatic bath set to a temperature higher than 60°C and 82°C or less. For the purpose of managing and controlling the holding temperature, a temperature sensor may be connected to the surface of the secondary battery precursor. After a set period of time, the secondary battery precursor is taken out from the thermostatic bath and is cooled to, for example, room temperature.

The temperature conditions and time conditions at the time of holding the potential adjusted state are preferably set such that the voltage difference before and after the holding is 100 mV to 300 mV. The voltage difference may be, for example, a difference between the state of charge of the positive electrode and the state of charge of the negative electrode that had occurred due to a reaction on the negative electrode, appearing as a 100 mV to 300 mV drop in the battery voltage. By dominantly causing the difference in charge state in this manner, it is possible to limit use of the region of the low state of charge of the positive electrode having a poor cycle performance.

The temporary seal is opened, and the gas generated by the pretreatment is released. After degassing, the container member is fully sealed to provide a secondary battery. For example, the secondary battery precursor taken out from the thermostatic bath is cooled to room temperature, then the secondary battery precursor is placed in an inert atmosphere, and the temporary sealing is opened. The container member is fully sealed under a reduced pressure environment, whereby a secondary battery can be provided. Alternatively, the temporary sealing may be opened under a reduced pressure environment, and then the container member is fully sealed to thereby provide a secondary battery. The reduced pressure environment herein refers to, for example, a vacuum state of about -90 kPa.

When a container member made of a laminate film is used, opening of the sealing can be performed, for example, by cutting open the container member at the position where temporary sealing was performed, or by cutting away the portion of the container member where temporary sealing was performed. The full sealing of the container member made of laminate film can be performed, for example, by closing the opening, which had resulted from opening the seal, by thermal fusion. The full sealing of the container member is desirably performed at a position further inside from the position where the temporary sealing was performed (a position farther from the opening end portion).

When the metal container is used as the container member, for example, the sealing plug used for temporary sealing may be removed to open the seal. The metal container can be fully sealed, for example, by welding a sealing plug made of a material capable of being welded to the container to the opening (for example, an electrolyte inlet) that had resulted from unplugging.

After the treatment of holding the secondary battery at the holding temperature, charge and discharge may be performed to adjust the secondary battery to the state of charge for shipment. Charge and discharge to the shipment state may be performed, for example, before opening the temporary sealing and degassing, or may be performed after fully sealing the secondary battery. In addition, after full sealing, capacity examination by charge and discharge of the secondary battery for quality examination as a product, or break-in charge-and-discharge of the secondary battery may also be performed.

A specific example will be described. Herein, there will be described an example in which a laminate pack made of a laminate film is used as a container member.

An electrode group is fabricated using a positive electrode and a negative electrode, and the electrode group is housed inside the laminate pack. The electrolyte is put into the laminate pack under an argon atmosphere, and then temporary sealing is performed by thermal fusion under reduced pressure . The potentials of the positive and negative electrodes are adjusted by performing initial charge-and-discharge and setting the battery voltage to a predetermined voltage. The secondary battery precursor whose electrode potential has been adjusted is placed in a thermostatic bath at a predetermined temperature, taken out from the thermostatic bath after a set period of time, placed again in an argon atmosphere, the upper part of the laminate pack is opened, and thermally fused again at a portion closer to the inner side under reduced pressure to perform full sealing.

Hereinafter, the positive electrode, the negative electrode, the electrolyte, the separator, the container member, the negative electrode terminal, and the positive electrode terminal will be described in detail.

1) Positive Electrode

The positive electrode may include a positive electrode current collector and a positive electrode active material-containing layer. The positive electrode active material-containing layer may be formed on one face or both the obverse and reverse faces of the positive electrode current collector. The positive electrode active material-containing layer may optionally contain an electro-conductive agent and a binder, in addition to the positive electrode active material.

Examples of the positive electrode active material include an oxide or sulfide. The positive electrode may contain one compound alone as the positive electrode active material, or may contain two or more compounds in combination. Examples of the oxide and sulfide include a compound into and out from which Li or Li ions can be inserted and extracted.

Examples of such a compound include manganese dioxides ($MnO_2$), iron oxides, copper oxides, nickel oxides, lithium manganese composite oxides (e.g., a compound represented by $Li_xMn_2O_4$ or $Li_xMnO_2$, where $0 < x \leq 1$), lithium nickel composite oxides (e.g., a compound represented by $Li_xNiO_2$, where $0 < x \leq 1$), lithium cobalt composite oxides (e.g., a compound represented by $Li_xCoO_2$, where $0 < x \leq 1$), lithium nickel cobalt composite oxides (e.g. , a compound represented by $Li_xNi_{1-y}Co_yO_2$, where $0 < x \leq 1$ and $0 < y < 1$), lithium manganese cobalt composite oxides (e.g. , a compound represented by $Li_xMn_yCo_{1-y}O_2$, where $0 < x \leq 1$ and $0 < y < 1$), lithium manganese nickel composite oxides having a spinel structure (e.g., a compound represented by $Li_xMn_{2-y}Ni_yO_4$, where $0 < x \leq 1$ and $0 < y < 2$), lithium phosphates having an olivine structure (e.g., a compound represented by $Li_xFePO_4$, where $0 < x \leq 1$; a compound represented by $Li_xFe_{1-y}Mn_yPO_4$, where $0 < x \leq 1$ and $0 < y \leq 1$; a compound represented by $Li_xCoPO_4$, where $0 < x \leq 1$), iron sulfates ($Fe_2(SO_4)_3$), vanadium oxides (e.g. , $V_2O_5$), and lithium nickel cobalt manganese composite oxides ($Li_xNi_{1-y-z}Co_yMn_zO_2$; $0 < x \leq 1$, $0 < y < 1$, $0 < z < 1$, and $y + z < 1$) .

Among them, examples of more preferred compounds as the positive electrode active material include lithium manganese composite oxides having a spinel structure ($Li_xMn_2O_4$; $0 < x \leq 1$), lithium nickel composite oxides ($Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}CO_yO_2$; $0 < x \leq 1$, $0 < y < 1$), lithium manganese nickel composite oxides having a spinel structure (e.g. , $Li_xMn_{2-y}Ni_yO_4$; $0 < x \leq 1$, $0 < y < 2$), lithium manganese cobalt composite oxides (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, and $y + z < 1$) . When these compounds are used for the positive electrode active material, the positive electrode potential can be enhanced.

When an ambient temperature molten salt is used as the electrolyte of the battery, positive electrode active materials that are preferably used include lithium iron phosphate, a compound represented by $Li_xVPO_4F$ where $0 \leq x \leq 1$, lithium manganese composite oxide, lithium nickel composite oxide, lithium nickel cobalt composite oxide, or a mixture thereof. Since these compounds have low reactivity with ambient temperature molten salts, cycle life can be improved. Details regarding the ambient temperature molten salt are described later.

The primary particle diameter of the positive electrode active material is preferably from 100 nm to 10 $\mu$m. The positive electrode active material having a primary particle size of 100 nm or more is easy to handle during industrial production. In the positive electrode active material having a primary particle size of 10 $\mu$m or less, in-solid diffusion of lithium ions can proceed smoothly.

The specific surface area of the positive electrode active material is preferably from 0.1 $m^2$/g to 10 $m^2$/g. The positive electrode active material having a specific surface area of 0.1 $m^2$/g or more can secure sufficient sites for inserting and extracting Li ions. The positive electrode active material having a specific surface area of 10 $m^2$/g or less is easy to handle during industrial production, and can secure a good charge-discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder.

The electro-conductive agent is added to enhance the current collection performance of the positive electrode active material and to suppress contact resistance between the positive electrode active material and the positive electrode current collector. Examples of the electro-conductive agent include carbonaceous substances such as vapor grown carbon fiber (VGCF), carbon blacks such as acetylene black, graphite, carbon fibers, graphene, carbon nanotubes, carbon nanofibers, and fullerenes. One of these may be used as the electro-conductive agent, or alternatively, two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil or an aluminum alloy foil containing one or more elements selected from Mg, Ti, Zn, Ni, Cr, Mn, Fe, Cu, and Si.

The thickness of the aluminum foil or aluminum alloy foil is preferably within a range from 5 $\mu$m to 20 um, and is more preferably 15 $\mu$m or less. The purity of the aluminum foil is preferably 99% by mass or more. The content of transition metals such as iron, copper, nickel, and chromium contained in the aluminum foil or aluminum alloy foil is preferably 1% by mass or less.

In addition, the positive electrode current collector may include a portion where the surface thereof has no positive electrode active material-containing layer formed thereon. This portion can serve as a positive electrode current collecting tab.

The positive electrode may be fabricated, for example, by the following method. First, the positive electrode active material, electro-conductive agent, and binder are suspended in a solvent to prepare a slurry. This slurry is applied onto one side or both sides of the positive electrode current collector. Next, the applied slurry is dried to obtain a stack of the positive electrode active material-containing layer and the current collector. Thereafter, the stack is pressed. The positive electrode is thus fabricated.

Alternatively, the positive electrode may be fabricated by the following method. First, the positive electrode active material, electro-conductive agent, and binder are mixed to obtain a mixture. The mixture is then formed into pellets. The positive electrode can be obtained by subsequently arranging these pellets on the positive electrode current collector.

2) Negative Electrode

The negative electrode may include a negative electrode current collector and a negative electrode active material-containing layer. The negative electrode active material-containing layer may be formed on one face or both the obverse and reverse faces of the negative electrode current collector. The negative electrode active material-containing layer may optionally contain an electro-conductive agent and a binder, in addition to the negative electrode active material.

The negative electrode active material includes, for example, a metal oxide. Examples of metal oxides that may be used as the active material include lithium titanate having a ramsdellite structure (e.g ., $Li_{2+y}Ti_3O_7$, $0 \leq y \leq 3$), lithium titanate having a spinel structure (e.g., $Li_{4+x}Ti_5O_{12}$, $0 \leq x \leq 3$), titanium dioxide ($TiO_2$), anatase titanium dioxide, rutile titanium dioxide, niobium pentoxide ($Nb_2O_5$), hollandite titanium composite oxide, orthorhombic titanium composite oxides, monoclinic niobium titanium oxides, and niobium composite oxides.

The negative electrode desirably includes a niobium-containing oxide as a negative electrode active material. The niobium-containing oxide includes niobium-titanium oxides and niobium composite oxides. The crystal structure of the niobium-titanium oxide may be, for example, monoclinic. When the negative electrode active material includes a monoclinic niobium-titanium oxide, high rate performance can be achieved in addition to an excellent energy density. The reason for this will be described by taking $Nb_2TiO_7$, which is a kind of monoclinic niobium-titanium oxide, as an example. The crystal structure of $Nb_2TiO_7$ has a large equivalent insertion space for lithium ions and is structurally stable. Furthermore, there are regions having a two-dimensional channel in which lithium ions diffuse rapidly and a conductive path in a [001] direction, connecting the regions . As a result, in the crystal structure of the monoclinic niobium-titanium oxide $Nb_2TiO_7$, insertion/extraction property of the lithium ions into the insertion space is improved and an insertion/extraction space of the lithium ions is effectively increased. As a result, it is possible to provide high capacity and high rate performance.

An example of monoclinic niobium-titanium oxide includes a composite oxide represented by $Li_xTi_{1-y}M1_yNb_{2-z}M2_zO_{7+\delta}$. Here, M1 is at least one selected from the group consisting of Zr, Si, and Sn. M2 is at least one selected from the group consisting of V, Ta, and Bi. Each subscript in the composition formula are $0 \leq x \leq 5$, $0 \leq y < 1$, $0 \leq z < 2$, and $-0.3 \leq \delta \leq 0.3$. A specific example of the monoclinic niobium-titanium composite oxide is $Li_xNb_2TiO_7$ ($0 \leq x \leq 5$) .

Another example of the monoclinic niobium-titanium oxide is a composite oxide represented by $Li_xTi_{1-y}M3_{y+z}Nb_{2-z}O_{7-\delta}$. Here, M3 is at least one selected from the group consisting of Mg, Fe, Ni, Co, W, Ta, and Mo. Each subscript in the composition formula are $0 \leq x \leq 5$, $0 \leq y < 1$, $0 \leq z < 2$, and $-0.3 \leq \delta \leq 0.3$.

Specific examples of the niobium-titanium oxides include $Nb_2TiO_7$, $Nb_2Ti_2O_9$, $Nb_{10}Ti_2O_{29}$, $Nb_{14}TiO_{37}$, and $Nb_{24}TiO_{62}$. The niobium-titanium oxide may be a substituted niobium-titanium oxide in which at least a part of Nb and/or Ti is substituted with a dopant. Examples of substitution elements are Na, K, Ca, Co, Ni, Si, P, V, Cr, Mo, Ta, Zr, Mn, Fe, Mg, B, Pb, and Al. The substituted niobium-titanium oxide may include one species or two or more species of the substitution elements.

The titanium-niobium oxide may include a titanium-niobium oxide having an orthorhombic crystal structure. An example of titanium-niobium oxide of the orthorhombic crystal structure includes a compound represented by $Li_{2+v}Na_{2-w}M4_bTi_{6-c-d}Nb_cM5_dO_{14+\sigma}$. In general formula $Li_{2+v}Na_{2-w}M4_bTi_{6-c-d}Nb_cM5_dO_{14+\sigma}$, subscript v is within a range of $0 \leq v \leq 4$, subscript w is within a range of $0 < w < 2$, subscript b is within a range of $0 \leq b < 2$, subscript c is within a range of $0 < c < 6$,

subscript d is within a range of $0 \leq d < 3$, a sum of the subscript c and the subscript d is within a range of $0 < c + d < 6$, and subscript $\sigma$ is within a range of $-0.5 \leq \sigma \leq 0.5$. Element M4 is at least one selected from the group consisting of Cs, K, Sr, Ba and Ca. Element M5 is at least one selected from the group consisting of Zr, Sn, V, Ta, Mo, W, Fe, Mn and Al.

In the niobium-titanium oxide, the elemental ratio between niobium and the other elements may deviate from the theoretical value with respect to the above-described composition formula or general formula.

The negative electrode active material may include one niobium-containing oxide singly, or may include a combination of two or more of the above.

The negative electrode active material may further include other compounds in addition to the niobium-containing oxide. Herein, for convenience, the niobium-containing oxide is referred to as a first negative electrode active material, and another compound as negative electrode active material is referred to as a second negative electrode active material. The negative electrode active material may include one or more of the first negative electrode active materials and one second negative electrode active material in combination, or may include one or more of the first negative electrode active materials and two or more of second negative electrode active materials in combination. The negative electrode active material includes the first negative electrode active material (niobium-containing oxide) in a proportion of, for example, 70% by mass or more, and preferably 90% by mass or more. The negative electrode active material may also be one including only the first negative electrode active material (niobium-containing oxide). Alternatively, the negative electrode active material may be one including only the second negative electrode active material.

Examples of the second negative electrode active material include the metal oxides given above as examples besides the niobium-containing oxides. Metal oxides besides the niobium-containing oxides include orthorhombic titanium oxides besides the above-mentioned titanium-niobium oxides of orthorhombic crystal structure.

Examples of the orthorhombic titanium oxide other than titanium-niobium oxides of orthorhombic crystal structure include a compound represented by $Li_{2+a}M^I_{2-b}Ti_{6-c}M^{II}_dO_{14+\sigma}$. Here, $M^I$ is at least one selected from the group consisting of Sr, Ba, Ca, Mg, Na, Cs, Rb, and K. $M^{II}$ is at least one selected from the group consisting of Zr, Sn, V, Ta, Mo, W, Y, Fe, Co, Cr, Mn, Ni and Al. The respective subscripts in the composition formula are $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$).

The negative electrode active material is contained in the negative electrode active material-containing layer, for example, in the form of particles. The negative electrode active material particles may take the form of, for example, primary particles, or may take the form of agglomerated secondary particles. The negative electrode active material particles may be a mixture of primary particles and secondary particles.

The electro-conductive agent is added to improve current collection performance and to suppress the contact resistance between the active material and the current collector. Examples of the electro-conductive agent include carbonaceous substances such as vapor grown carbon fiber (VGCF), carbon blacks such as acetylene black, graphite, carbon nanotubes, and carbon nanofibers. One of these may be used as the electro-conductive agent, or alternatively, two or more may be used in combination as the electro-conductive agent. Alternatively, instead of using an electro-conductive agent, a carbon coating or an electro-conductive inorganic material coating may be applied to the surface of the active material particle. Moreover, the current collecting performance of the active material-containing layer can be enhanced by coating carbon or an electro-conductive material on the active material surface while using an electro-conductive agent.

The binder is added to fill gaps among the dispersed active material and also to bind the negative electrode active material with the negative electrode current collector. The negative electrode desirably contains a material soluble or dispersible in water as a binder. Examples of such a binder include styrene-butadiene rubber, carboxymethyl cellulose (CMC), salts of CMC, polyacrylic acid, polymers of polyacrylic acid, and acrylic rubber. One of these may be used as the binder, or alternatively, two or more may be used in combination as the binder.

In the negative electrode active material-containing layer, the negative electrode active material, electro-conductive agent, and binder are preferably included in proportions, respectively of 70% by mass or more and 96% by mass or less, 2% by mass or more and 28% by mass or less, and 2% by mass or more and 28% by mass or less. By having the amount of the electro-conductive agent adjusted to 2% by mass or more, the current collecting performance of the negative electrode active material-containing layer can be improved. Furthermore, by having the amount of the binder adjusted to 2% by mass or more, the binding property between the negative electrode active material-containing layer and the current collector becomes sufficient, thereby excellent cycle performance can be expected. On the other hand, each of the electro-conductive agent and the binder are preferably included at 28% by mass or less, in view of achieving high capacity.

The density of the negative electrode active material-containing layer (excluding the current collector) is preferably 1.8 g/cm$^3$ or more and 2.8 g/cm$^3$ or less. The negative electrode in which the density of the negative electrode active material-containing layer falls within this range is excellent in energy density and electrolyte retention. The density of the negative electrode active material-containing layer is more preferably 2.1 g/cm$^3$ or more and 2.6 g/cm$^3$ or less.

Used for the negative electrode current collector is a material that is electrochemically stable at an electric potential at which lithium (Li) is inserted into and extracted from the negative electrode active material. The negative electrode current collector is preferably made from, for example, copper, nickel, stainless steel or aluminum, or an aluminum alloy containing one or more elements selected from Mg, Ti, Zn, Mn, Fe, Cu, and Si. The thickness of the negative electrode current collector is preferably 5 um or more and 20 um or less. The negative electrode current collector with such a thickness can be balanced between the strength and weight reduction for the negative electrode.

In addition, the negative electrode current collector may include a portion where the surface thereof has no negative electrode active material-containing layer formed thereon. This portion can serve as a current collecting tab.

The negative electrode may be fabricated, for example, by the following method. First, the negative electrode active material, electro-conductive agent, and binder are suspended in a solvent to prepare a slurry. This slurry is applied onto one or both sides of the negative electrode current collector. Then, the applied slurry is dried to obtain a stack of the negative electrode active material-containing layer and the current collector. Thereafter, this stack is subjected to pressing. In this way, the negative electrode can be fabricated.

Alternatively, the negative electrode may be fabricated by the following method. First, the negative active material particles, electro-conductive agent, and binder are mixed to obtain a mixture. The mixture is then formed into pellets. The negative electrode can be obtained by subsequently arranging these pellets on the negative electrode current collector.

3) Electrolyte

As the electrolyte, for example, a liquid nonaqueous electrolyte or gel nonaqueous electrolyte may be used. The liquid nonaqueous electrolyte is prepared by dissolving an electrolyte salt as solute in a liquid solvent, such as an organic solvent. The concentration of electrolyte salt is preferably from 0.5 mol/L to 2.5 mol/L.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), and lithium bistrifluoromethylsulfonylimide ($LiN(CF_3SO_2)_2$), and mixtures thereof. The electrolyte salt is preferably resistant to oxidation even at a high potential, and most preferably $LiPF_6$.

Examples of the organic solvent include: cyclic carbonates such as propylene carbonate (PC), ethylene carbonate (EC), and vinylene carbonate (VC) ; linear carbonates such as diethyl carbonate (DEC), dimethyl carbonate (DMC), and methyl ethyl carbonate (MEC) ; cyclic ethers such as tetrahydrofuran (THF), 2-methyl tetrahydrofuran (2MeTHF), and dioxolane (DOX) ; linear ethers such as dimethoxy ethane (DME), and diethoxy ethane (DEE) ; $\gamma$-butyrolactone (GBL); acetonitrile (AN) ; and sulfolane (SL) . These organic solvents may be used singly or as a mixed solvent.

The electrolyte may contain a further additive in addition to the electrolyte salts described above. For example, at least one selected from the group consisting of lithium bis(trifluoromethanesulfonyl)imide (LiTFSI; $LiN(SO_2CF_3)_2$), lithium bis (fluorosulfonyl) imide (LiFSI; $LiN(SO_2F)_2$), lithium difluorophosphate (LiDFP; $LiPO_2F_2$), lithium difluorooxalate borate (LiDFOB; $LiBF_2(C_2O_4)$), lithium bisoxalate borate (LiBOB; $LiB [(OCO)_2]_2$), and lithium triflate (LiOtF; $LiCF_3SO_3$, also known as lithium trifluoromethanesulfonate) may be contained in the electrolyte. These additives are strongly invulnerable against heat and hardly deteriorate even when held at high temperature in the above-described pretreatment. Furthermore, these additives can form effective coatings by reaction with water or by electrochemical decomposition. Specifically, a solid electrolyte interlayer (SEI) protective film can be formed through consumption of electric charges. Thus, by containing the above-described additive in the electrolyte, a protective film may be formed on the positive electrode and/or the negative electrode during pretreatment. Such a protective film covers at least a part of the surface of the active material of the electrode, whereby the surface of the active material can be modified, and the reaction between the active material and the electrolyte can be suppressed. As a result, gas generation can be suppressed, and excellent life performance can be exhibited in a high-temperature environment.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the nonaqueous electrolyte.

The ambient temperature molten salt (ionic melt) indicates compounds among organic salts made of combinations of organic cations and anions, which are able to exist in a liquid state at ambient temperature (15°C to 25°C) . The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of $1 \times 10^{-6}$ S/cm or more at 25°C. Examples of the inorganic solid electrolyte include oxide solid electrolytes and sulfide solid electrolytes. Specific examples of the inorganic solid electrolyte are described below.

Preferably used as the oxide solid electrolyte is a lithium phosphate solid electrolyte having a NASICON (Sodium (Na) Super Ionic Conductor) structure represented by a general formula $Li_{1+x}M\alpha_2(PO_4)_3$. $M\alpha$ in the above general formula is, for example, one or more selected from the group consisting of titanium (Ti), germanium (Ge), strontium (Sr), zirconium (Zr), tin (Sn), aluminum (Al), and calcium (Ca). The subscript x is within the range of $0 \leq x \leq 2$.

Specific examples of the lithium phosphate solid electrolyte having the NASICON structure include a LATP compound represented by $Li_{1+x}Al_xTi_{2-x}(PO_4)_3$ where $0.1 \leq x \leq 0.5$; a compound represented by $Li_{1+x}Al_yM\beta_{2-y}(PO_4)_3$ where $M\beta$ is one or more selected from the group consisting of Ti, Ge, Sr, Zr, Sn, and Ca, $0 \leq x \leq 1$, and $0 \leq y \leq 1$; a compound represented by $Li_{1+x}Al_xGe_{2-x}(PO_4)_3$ where $0 \leq x \leq 2$; a compound represented by $Li_{1+x}Al_xZr_{2-x}(PO_4)_3$ where $0 \leq x \leq 2$; a compound represented by $Li_{1+x+y}Al_xM\gamma_{2-x}Si_yP_{3-y}O_{12}$ where $M\gamma$ is one or more selected from the group consisting of Ti and Ge, $0 < x \leq 2$, and $0 \leq y < 3$; and a compound represented by $Li_{1+2x}Zr_{1-x}Cax(PO_4)_3$ where $0 \leq x < 1$.

In addition to the above lithium phosphate solid electrolyte, examples of the oxide solid electrolyte include amorphous LIPON compounds represented by $Li_xPO_yN_z$ where $2.6 \leq x \leq 3.5$, $1.9 \leq y \leq 3.8$, and $0.1 \leq z \leq 1.3$ (e.g., $Li_{2.9}PO_{3.3}N_{0.46}$); a compound having a garnet structure represented by $La_{5+x}A_xLa_{3-x}M\delta_2O_{12}$ where A is one or more selected from the group consisting of Ca, Sr, and Ba, $M\delta$ is one or more selected from the group consisting of Nb and Ta, and

$0 \leq x \leq 0.5$; a compound represented by $Li_3M\delta_{2-x}L_2O_{12}$ where $M\delta$ is one or more selected from the group consisting of Nb and Ta, L may include Zr, and $0 \leq x \leq 0.5$; a compound represented by $Li_{7-3x}Al_xLa_3Zr_3O_{12}$ where $0 \leq x \leq 0.5$; a LLZ compound represented by $Li_{5+x}La_3M\delta_{2-x}Zr_xO_{12}$ where $M\delta$ is one or more selected from the group consisting of Nb and Ta, and $0 \leq x \leq 2$ (e.g., $Li_7La_3Zr_2O_{12}$); and a compound having a perovskite structure and represented by $La_{2/3-x}Li_xTiO_3$ where $0.3 \leq x \leq 0.7$.

One or more among the above compounds may be used as the solid electrolyte. Two or more of the above solid electrolytes may be used, as well.

4) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because such a porous film melts at a fixed temperature and thus able to shut off current.

5) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

6) Negative Electrode Terminal

The negative electrode terminal may be made of a material that is electrochemically stable at the potential at which Li is inserted into and extracted from the negative electrode active material, and has electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

7) Positive Electrode Terminal

The positive electrode terminal may be made of, for example, a material that is electrically stable in the potential range of 3 V to 4.5 V (vs. Li/Li$^+$) relative to the redox potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

<Powder X-Ray Diffraction>

The crystal structure of the compound included as active material can be examined by X-ray diffraction (XRD). As an apparatus for powder X-ray diffraction measurement, for example, SmartLab manufactured by Rigaku or an apparatus having equivalent functions is used. Measurement is performed under the following conditions:

X-ray source: Cu target
Output: 45 kV, 200 mA
soller slit: 5 degrees in both incident light and received light
step width ($2\theta$): 0.02 deg
scan speed: 20 deg/min
semiconductor detector: D/teX Ultra 250
sample plate holder: flat glass sample plate holder (0.5 mm thick)
measurement range: $5° \leq 2\theta \leq 90°$.

Next, the secondary battery precursor used in the production method for a secondary battery according to the approach will be more specifically described with reference to the drawings.

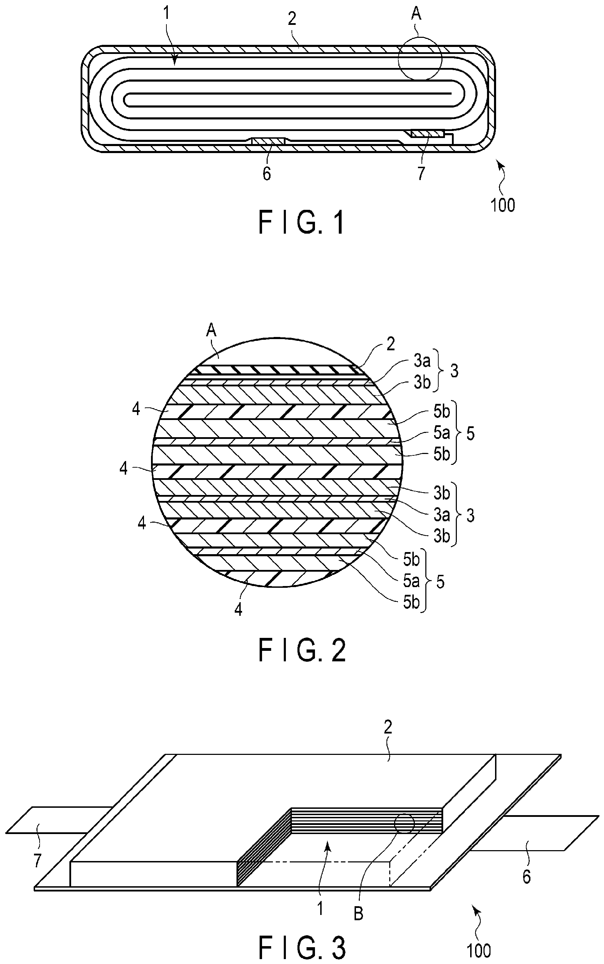

FIG. 1 is a cross-sectional view schematically showing an example of a secondary battery precursor according to the approach. FIG. 2 is an enlarged cross-sectional view of section A of the secondary battery precursor shown in FIG. 1.

The secondary battery precursor 100 shown in FIGS. 1 and 2 includes a bag-shaped container member 2 shown in FIG. 1, an electrode group 1 shown in FIG. 1 and 2, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched between the resin layers.

As shown in FIG. 1, the electrode group 1 is a wound electrode group in a flat form. The wound electrode group 1 in a flat form includes a negative electrode 3, a separator 4, and a positive electrode 5, as shown in FIG. 2. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 2. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 1, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2.

A thermoplastic resin layer is provided on the inner surface of a bag-shaped container member 2, and is thermally fused to close the opening of the bag-shaped container member 2. For either of the temporary sealing before the treatment of holding the secondary battery precursor 100 in the state where the electrode potential is adjusted, and the full sealing after the treatment and degassing, the opening of the bag-shaped container member 2 is closed, for example, by thermal fusion. The position where thermal fusion is performed during temporary sealing is, for example, a position closer to the opening end portion than the position where thermal fusion is performed in the full sealing.

A liquid electrolyte may be put in, for example, from the opening of the bag-shaped container member 2 before temporary sealing. For example, the opening of the bag-shaped container member 2 is closed by thermal fusion with a part left unfused, and the liquid electrolyte is introduced through the part left without thermal fusion. Then, the portion from which the electrolyte is put in is closed by thermal fusion and temporarily sealed.

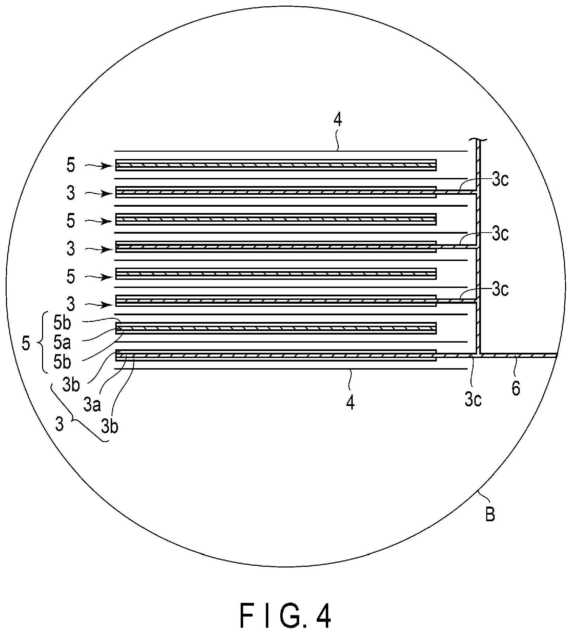

The secondary battery precursor according to the approach is not limited to the secondary battery precursor of the configuration shown in FIGS. 1 and 2, and may be, for example, one of a structure as shown in FIGS. 3 and 4.

FIG. 3 is a partially cut-out perspective view schematically showing another example of a secondary battery precursor according to the approach. FIG. 4 is an enlarged cross-sectional view of section B of the secondary battery precursor shown in FIG. 3.

The secondary battery precursor 100 shown in FIGS. 3 and 4 includes an electrode group 1 shown in FIGS. 3 and 4, a container member 2 shown in FIG. 3, and an electrolyte, which is not shown. The electrode group 1 and the electrolyte are housed in the container member 2. The electrolyte is held in the electrode group 1.

The container member 2 is made of a laminate film including two resin layers and a metal layer sandwiched between the resin layers.

As shown in FIG. 4, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 4, the negative electrode current collecting tabs 3c do not overlap the positive electrodes 5. The plural negative electrode current collecting tabs 3c are electrically connected to the strip-shaped negative electrode terminal 6. A tip of the strip-shaped negative electrode terminal 6 is drawn to the outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn to the outside from the container member 2.

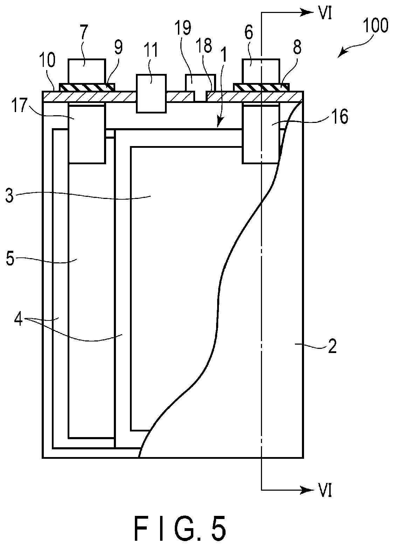

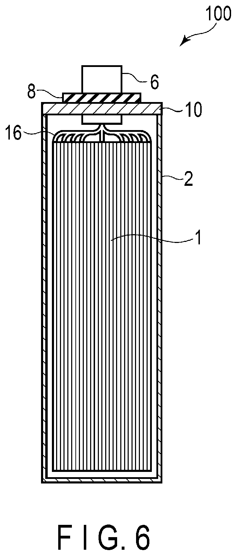

Yet another example of the secondary battery precursor is explained with reference to FIGS. 5 and 6. FIG. 5 is a cross-sectional view schematically illustrating yet another example of the secondary battery precursor according to the approach. FIG. 6 is a schematic cross-sectional view along a line VI-VI shown in FIG. 5 of the secondary battery precursor.

An electrode group 1 is housed in a container member 2 made of a rectangular tubular metal container. The electrode group 1 includes a negative electrode 3, a separator 4, and a positive electrode 5. The electrode group 1 has a structure formed by interposing the separator 4 between the positive electrode 5 and the negative electrode 3, and spirally winding so as to form a flat shape. An electrolyte (not shown) is held in the electrode group 1. As shown in FIG. 5, a strip-shaped negative electrode lead 16 is electrically connected to each of plural portions at an end of the negative electrode 3 located on an end face of the electrode group 1. In addition, a strip-shaped positive electrode lead 17 is electrically connected to each of plural portions at an end of the positive electrode 5 located on the end face. The plural negative electrode leads 16 are electrically connected to a negative electrode terminal 6 in a bundled state, as shown in FIG. 6. In addition, the plural positive electrode leads 17 are similarly electrically connected to a positive electrode terminal 7 in a bundled state, although not shown.

A sealing plate 10 made of metal is fixed to the opening portion of the container member 2 made of metal by welding or the like. The negative electrode terminal 6 and the positive electrode terminal 7 are extracted to the outside from outlets provided on the sealing plate 10, respectively. On the inner surfaces of each outlet of the sealing plate 10, a negative electrode gasket 8 and a positive electrode gasket 9 are arranged to avoid a short circuit caused by contact respective with the negative electrode terminal 6 and the positive electrode terminal 7. By providing the negative electrode gasket 8 and the positive electrode gasket 9, the airtightness of the secondary battery can be maintained.

A control valve 11 (safety valve) is provided on the sealing plate 10. When the internal pressure of the battery cell is raised by gas generation, the generated gas can be released from the control valve 11 to the outside. In FIG. 5, the control valve 11 is disposed at the center of the sealing plate 10. However, the position of the control valve 11 may be an end of the sealing plate 10. The control valve 11 may be omitted.

Additionally, an inlet 18 is provided on the sealing plate 10. The electrolyte may be put in via the inlet 18. The inlet 18 may be closed with a sealing plug 19 after the electrolyte is put in. The inlet 18 and the sealing plug 19 may be omitted. When implementing the temporary sealing before performing the treatment of holding the secondary battery precursor 100 at the holding temperature in the state with the electrode potentials adjusted, for example, a sealing plug 19 made of rubber may be used. When implementing the full sealing after the treatment and degassing, for example, a sealing plug 19 made of the same material as the sealing plate 10 is used and welded onto the sealing plate 10 in a state with the inlet 18 closed.

The production method for a secondary battery according to a first approach includes holding a secondary battery precursor that includes a positive electrode, a negative electrode, and an electrolyte in a potential adjusted state where the negative electrode potential is adjusted to be within a range of 0,6 V or greater to less than 1.5 V relative to the oxidation-reduction potential of lithium. The secondary battery precursor is held in the potential adjusted state at a temperature within a range greater than 60°C but 82 °C or less. The production method can produce a secondary battery that exhibits high output performance and for which performance degradation and gas generation is little even when charge-and-discharge cycles are repeated.

(Second Approach)

According to a second approach, a secondary battery is provided. The secondary battery is a secondary battery produced by the production method according to the first approach.

That is, the secondary battery according to the second approach is a secondary battery obtained by performing the above pretreatment on the secondary battery precursor in the production method according to the first approach. Therefore, the secondary battery may be, for example, a nonaqueous electrolyte secondary battery or a lithium ion nonaqueous electrolyte secondary battery.

As compared with the secondary battery precursor before the electrode potential adjustment as described in the first approach, the details of the secondary battery according to the second approach are the same as those of the secondary battery precursor described in the first approach, except that the secondary battery is in a state of a finished product after pretreatment and accompanying degassing and full sealing. Namely, the secondary battery according to the second approach includes the positive electrode, the negative electrode, and the electrolyte described in the first approach. In addition, the secondary battery according to the second approach may include the separator, the container member, the positive electrode terminal, and the negative electrode terminal described in the first approach since details overlap, description thereof is omitted.

However, the secondary battery according to the second approach is in a state where components that may contribute to gas generation such as residual moisture had diminished as compared with the secondary battery precursor before being subjected to pretreatment. This is because, at least a part of the residual moisture had gasified and has been released outside the container member, upon the pretreatment. In addition, the secondary battery precursor before the pretreatment does not have a protective film on the electrode surface; however, in the secondary battery, the positive and negative electrodes may have a protective film on the surface. Moreover, the secondary battery precursor before the pretreatment may be in a temporarily sealed state, whilst the secondary battery is in a fully sealed state.

The secondary battery according to the second approach is produced by the production method according to the first approach for a secondary battery. Therefore, such a secondary battery can exhibit high output performance, and performance degradation and gas generation are little even when charge-and-discharge cycles are repeated.

(Third Approach)

According to a third approach, a battery module is provided. The battery module includes plural of secondary batteries according to the second approach.

In the battery module, each of the single-batteries may be arranged to be electrically connected in series or in parallel, or may be arranged in combination of in-series connection and in-parallel connection.

An example of the battery module according to the approach will be described next, with reference to the drawings.

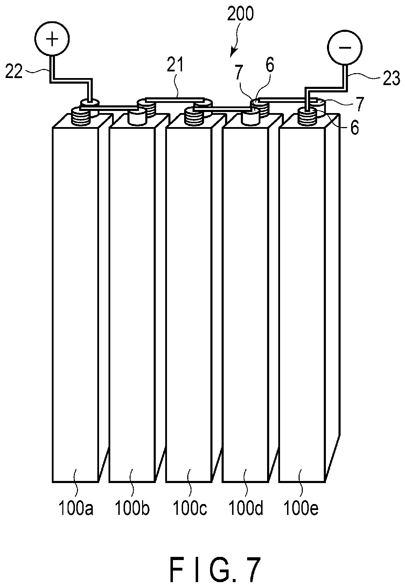

FIG. 7 is a perspective view schematically showing an example of the battery module. The battery module 200 shown in FIG. 7 includes five single-batteries 100a to 100e, four bus bars 21, a positive electrode-side lead 22, and a negative electrode-side lead 23. Each of the five single-batteries 100a to 100e is the secondary battery according to the third approach.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 7 is a battery module of five-in-series connection. Although no example is depicted in drawing, in a battery module including plural single-batteries that are electrically connected in parallel, for example, the plural single-batteries may be electrically connected by having plural negative electrode terminals being connected to each other by bus bars while having plural positive electrode terminals being connected to each other by bus bars.

The positive electrode terminal 7 of at least one battery among the five single-batteries 100a to 100e is electrically connected to the positive electrode-side lead 22 for external connection. In addition, the negative electrode terminal 6 of at least one battery among the five single-batteries 100a to 100e is electrically connected to the negative electrode-side lead 23 for external connection.

The battery module according to the third approach includes the secondary battery according to the second approach. Therefore, the battery module can exhibit high output performance and has little decrease in performance and gas generation even when charge-discharge cycles are repeated.

(Fourth Approach)

According to a fourth approach, a battery pack is provided. The battery pack includes a battery module according to the third approach. The battery pack may include a single secondary battery according to the second approach, in place of the battery module according to the third approach.

The battery pack may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the secondary battery, and/or to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the approach will be described with reference to the drawings.

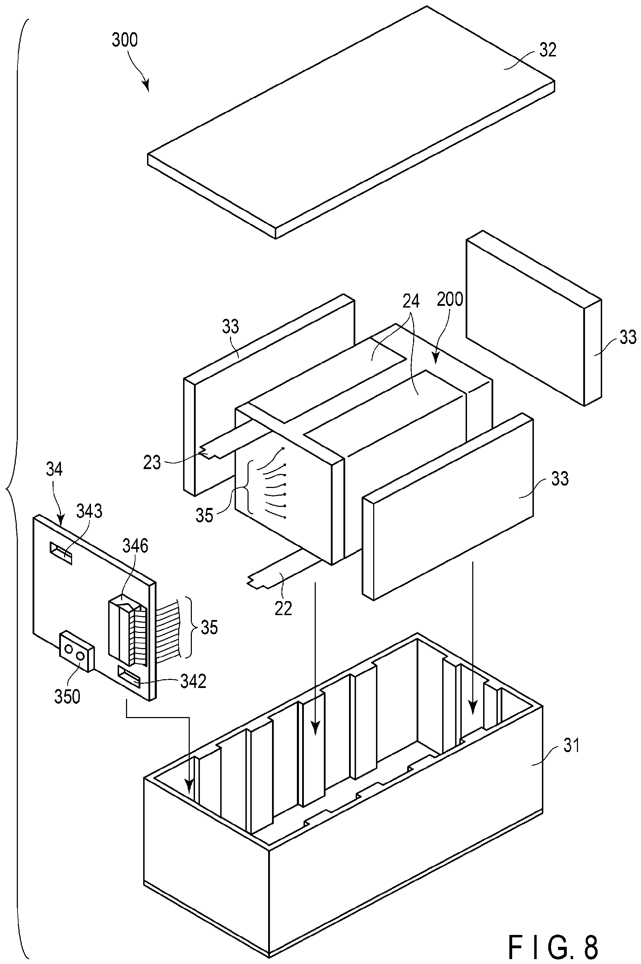

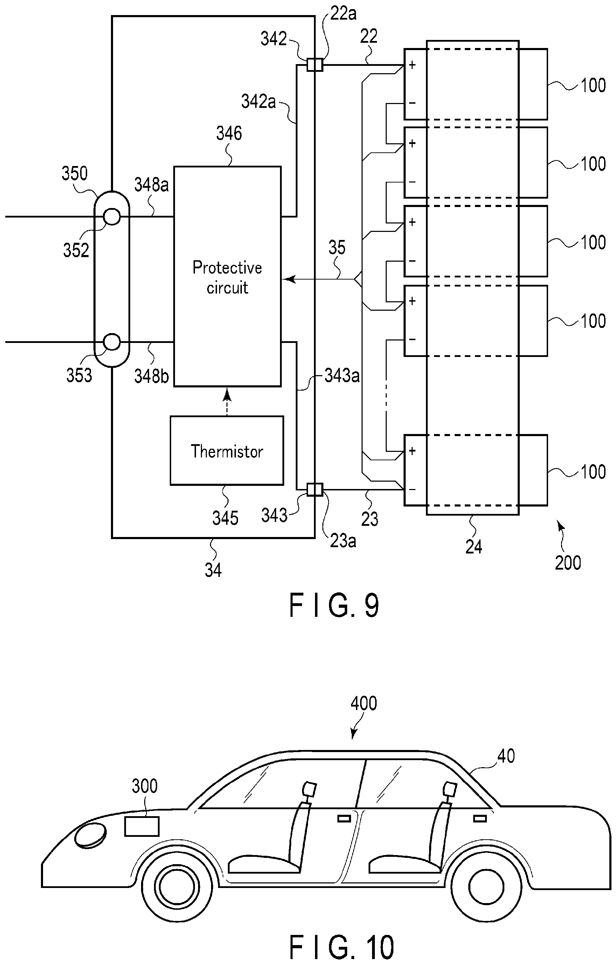

FIG. 8 is an exploded perspective view schematically showing an example of the battery pack. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wires 35, and an insulating plate (not shown).

The housing container 31 shown in FIG. 8 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tapes 24.

At least one of the plural single-batteries 100 is a secondary battery according to the third approach. The plural single-batteries 100 are electrically connected in series, as shown in FIG. 9. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tapes 24 fasten the plural single-batteries 100. The plural single-batteries 100 may be fixed using a heat shrinkable tape in place of the adhesive tapes 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200 . The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode (s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the fourth approach is provided with the secondary battery according to the second approach or the battery module according to the third approach. Accordingly, the battery pack can exhibit high output performance and has little decrease in performance and gas generation even when charge-discharge cycles are repeated.

(Fifth Approach)

According to a fifth approach, a vehicle is provided. The battery pack according to the fourth approach is installed on this vehicle.

In the vehicle, the battery pack is configured, for example, to recover regenerative energy from motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack on an automobile, the battery pack may be installed in the engine compartment of the automobile, in rear parts of the vehicle body, or under seats.

Plural battery packs may be installed in the vehicle. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle is explained below, with reference to the drawings.

FIG. 10 is a partially see-through diagram schematically showing an example of the vehicle.

A vehicle 400, shown in FIG. 10 includes a vehicle body 40 and a battery pack 300 according to the fourth approach. In the example shown in FIG. 10, the vehicle 400 is a four-wheeled automobile.

This vehicle 400 may have plural battery packs 300 installed therein. In such a case, the batteries (e.g., single-batteries or battery module) included in the battery packs 300 may be connected in series, connected in parallel, or connected in a combination of in-series connection and in-parallel connection.

In FIG. 10, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

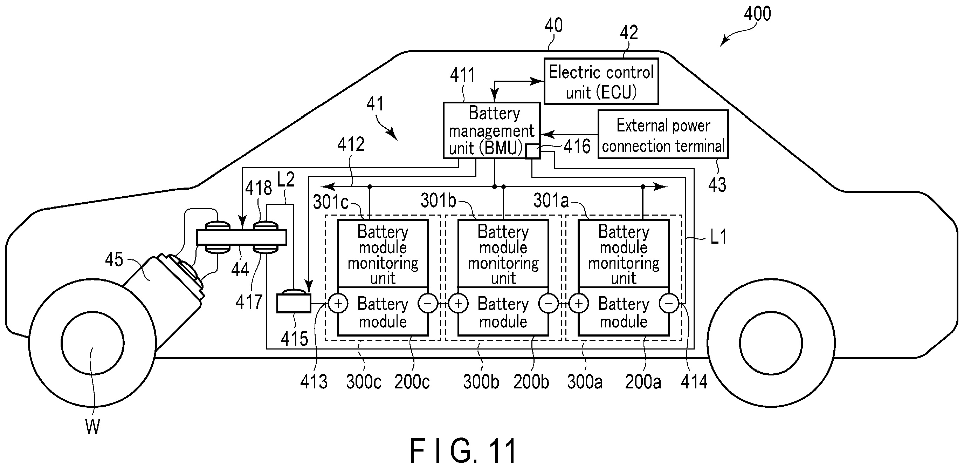

Next, with reference to FIG. 11, an aspect of operation of the vehicle according to the approach is explained.

FIG. 11 is a diagram schematically showing an example of a control system related to an electric system in the vehicle. A vehicle 400, shown in FIG. 11, is an electric automobile.

The vehicle 400, shown in FIG. 11, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 11, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at multiple nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 11) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the fifth approach is installed with the battery pack according to the fourth approach. Thus, the vehicle can exhibit high performance and is high in reliability.

Examples

Examples will be described below; however, the approaches are not limited to the examples described below.

(Example 1)

<Fabrication of positive electrode>

100 parts by mass of lithium-nickel-cobalt-manganese composite oxide $LiNi_{0.8}Co_{0.1}Mn_{0.1}O_2$ (NCM811) as positive electrode active material, 5 parts by mass of acetylene black as electro-conductive agent, and 5 parts by mass of polyvinylidene fluoride (PVdF) as binder were added to N-methylpyrrolidone (NMP), and mixed to prepare a slurry. This slurry was applied onto both surfaces of a current collector made of aluminum foil having a thickness of 12 um, then dried and pressed to thereby prepare a positive electrode having an electrode density (excluding the current collector) of 3.2 $g/cm^3$ .

<Fabrication of negative electrode>

100 parts by mass of a monoclinic niobium-titanium oxide $Nb_2TiO_7$ as negative electrode active material, 5 parts by mass of acetylene black and 2.5 parts by mass of carbon nanofiber as electro-conductive agent, and 2.4 parts by mass of sodium carboxymethyl cellulose (NaCMC) and 2.5 parts by mass of styrene-butadiene rubber (SBR) as binder were added to water and mixed to prepare a slurry. This slurry was applied onto both surface of a current collector made of aluminum foil having a thickness of 12 $\mu$m, then dried and pressed to thereby prepare a negative electrode having an electrode density (excluding the current collector) of 2.6 g/cm$^3$.

<Fabrication of electrode group>

The positive electrode prepared as described above, a separator made of cellulose and having a thickness of 15 $\mu$m, the negative electrode prepared as described above, and the separator were stacked in this order, and then wound in a spiral shape so that the negative electrode was located outermost to thereby prepare an electrode group. This was hot-pressed at 90°C to produce a flat electrode group having a width of 58 mm and a thickness of 3.0 mm. The obtained electrode group was housed in a container member made of a laminate film having a thickness of 0.1 mm, which included an aluminum foil having a thickness of 40 $\mu$m and polypropylene layers formed on both surfaces of the aluminum foil, and vacuum-dried at 120°C for 24 hours. The water content in the electrode group after drying was determined by the Karl Fischer measurement described above. The measured result gave 550 mass ppm.

<Preparation of nonaqueous electrolyte>

Lithium hexafluorophosphate (LiPF$_6$) was dissolved in propylene carbonate (PC) at a concentration of 1.0 mol/L under an argon environment to prepare a liquid nonaqueous electrolyte (electrolytic solution).
The electrolytic solution thus prepared was put into the electrode group housed in the dried laminate film, under an argon atmosphere. Then, the upper part of the laminate film was sealed under reduced pressure to provide a temporarily sealed secondary battery (battery precursor).

<Aging>

The temporarily sealed secondary battery was charged to a battery voltage of 3.2 V at room temperature (25°C) to adjust the positive electrode potential to 4.2 V (vs. Li/Li$^+$) and the negative electrode potential to 1 V (vs. Li/Li$^+$). The temporarily sealed secondary battery thus brought into the potential adjusted state was heated in a thermostatic bath at a temperature of 62°C (holding temperature, i.e., aging temperature) for 24 hours (holding time, i.e., aging time). After performing aging in this manner, the battery voltage of the secondary battery was measured, and the voltage difference from before to after aging was determined. The voltage had descended 155 mV during aging.

<Degassing>

After the heating, an upper portion of the temporarily sealed laminate pack was opened in an argon atmosphere. Thereafter, the pressure was reduced to discharge the gas, and the laminate film was sealed (full sealing) to provide a secondary battery.

(Example 2)

A secondary battery was produced in the same manner as in Example 1, except that LiFSI was added as a further additive to the liquid nonaqueous electrolyte so as to be 3% by mass with respect to the entire solution.

(Examples 3 to 15 and Comparative Examples 1 to 8)

A secondary battery was produced in the same manner as in Example 1, except that the binder used in the negative electrode, the additive to the electrolyte, and the pretreatment conditions were changed as shown in Tables 1 and 2 below. The binders of the negative electrode are indicated by abbreviations: NaCMC is sodium carboxymethyl cellulose, SBR is styrene-butadiene rubber, and PVdF is polyvinylidene fluoride. Some of the additives added to the electrolyte are also indicated by abbreviations: LiFSI is lithium bis (fluorosulfonyl) imide, LiDFP is lithium difluorophosphate, and LiDFOB is lithium difluorooxalate borate. For the pretreatment conditions, the positive electrode potential and the negative electrode potential adjusted to obtain a potential adjusted state, and the aging temperature and time (holding temperature and holding time) were changed. Each table indicates the water content of the electrode group measured before aging and the voltage difference (drop) between before and after aging.

[Table 1]

| | Negative Electrode Binder | Water Content in Electrode Group (mass ppm) | Additive to Electrolyte | Potential Adjusted State | | Aging | | Voltage Difference before and after Aging (mV) |
|---|---|---|---|---|---|---|---|---|
| | | | Composition /Addition Amount | Positive Electrode Potential (V vs. Li/Li$^+$) | Negative Electrode Potential (V vs. Li/Li$^+$) | Temperature (°C) | Time (Hr) | |
| Example 1 | NaCMC, SBR | 550 | none /0 mass % | 4.2 | 1 | 62 | 24 | 155 |
| Example 2 | NaCMC, SBR | 550 | LiFSI /1 mass % | 4.2 | 1 | 62 | 24 | 160 |
| Example 3 | NaCMC, SBR | 550 | LiFSI /1 mass % | 4.2 | 1 | 70 | 24 | 170 |
| Example 4 | NaCMC, SBR | 550 | LiFSI /1 mass % | 4.2 | 1 | 75 | 24 | 180 |
| Example 5 | NaCMC, SBR | 550 | LiFSI /1 mass % | 4.2 | 1 | 80 | 24 | 195 |
| Example 6 | NaCMC, SBR | 550 | LiFSI /1 mass % | 4.2 | 1 | 82 | 24 | 220 |
| Example 7 | NaCMC, SBR | 550 | LiFSI /1 mass % | 4.2 | 1 | 70 | 3 | 145 |
| Example 8 | NaCMC, SBR | 550 | LiFSI /1 mass % | 4.2 | 1 | 70 | 10 | 160 |
| Example 9 | NaCMC, SBR | 550 | LiFSI /1 mass % | 4.2 | 1 | 70 | 36 | 185 |
| Example 10 | NaCMC, SBR | 550 | LiFSI /1 mass % | 4.2 | 1 | 70 | 72 | 195 |
| Example 11 | NaCMC, SBR | 550 | LiFSI /1 mass % | 3.95 | 1.45 | 70 | 24 | 140 |

(Table 2

| | Negative Electrode Binder | Water Content in Electrode Group (mass ppm) | Additive to Electrolyte | Potential Adjusted State | | Aging | | Voltage Difference before and after Aging (mV) |
|---|---|---|---|---|---|---|---|---|
| | | | Composition /Addition Amount | Positive Electrode Potential (V vs. Li/Li$^+$) | Negative Electrode Potential (V vs. Li/Li$^+$) | Temperature (°C) | Time (Hr) | |
| Example 12 | NaCMC, SBR | 550 | LiFSI /1 mass % | 4.5 | 0.8 | 70 | 24 | 210 |
| Example 13 | NaCMC, SBR | 550 | LiFSI /1 mass % | 4.7 | 0.6 | 70 | 24 | 235 |
| Example 14 | NaCMC, SBR | 550 | LiDFP /1 mass % | 4.2 | 1 | 70 | 72 | 180 |
| Example 15 | NaCMC, SBR | 550 | LiDFOB /1 mass % | 4.2 | 1 | 70 | 72 | 185 |
| Comparative Example 1 | NaCMC, SBR | 550 | none /0 mass % | 4.2 | 1 | 58 | 24 | 98 |
| Comparative Example 2 | NaCMC, SBR | 550 | none /0 mass % | 4.2 | 1 | 85 | 24 | 320 |
| Comparative Example 3 | PVdF | 250 | none /0 mass % | 4.2 | 1 | 80 | 24 | 195 |
| Comparative Example 4 | NaCMC, SBR | 550 | none /0 mass % | 3.65 | 1.85 | 80 | 24 | 95 |
| Comparative Example 5 | NaCMC, SBR | 550 | none /0 mass % | 3.875 | 1.625 | 80 | 24 | 97 |
| Comparative Example 6 | NaCMC, SBR | 550 | 1,3-propane sultone /1 mass % | 3.65 | 1.85 | 80 | 24 | 160 |
| Comparative Example 7 | NaCMC, SBR | 550 | 1,3-propane sultone /1 mass % | 3.875 | 1.625 | 80 | 24 | 175 |
| Comparative Example 8 | PVdF | 250 | 1,3-propane sultone /1 mass % | 4.2 | 1.3 | 80 | 24 | 200 |

EP 4 496 020 A1

21

(Evaluation)

<Resistance evaluation>

The alternate current resistance (AC resistance) of each battery after the aging treatment was measured. After the battery was adjusted to SOC (State of Charge) 50%, the battery resistance when applying an alternating current of 1 kHz in an environment of 25°C was measured.

<Storage performance evaluation>

Each battery after the aging treatment was adjusted to SOC 100%, and then placed in the thermostatic bath at 55°C. After storage for 1 month, the capacity retention ratio, the AC resistance increase ratio, and the amount of gas generated during that time were measured. Details of each measurement will be described later.

<Cycle performance evaluation>

Each battery after the aging treatment was subjected to a cycle test as follows. 1000 cycles of charge-and-discharge in an environment of 70°C at a charge/discharge rate of 1C/1C within a SOC range of 0% to 90% were performed. After performing 1000 cycles of charge and discharge, the capacity retention ratio, the AC resistance increase ratio, and the amount of gas generated during that time were measured. Each measurement was performed as follows.

The capacity retention ratio was obtained as follows . The battery was charged and discharged in an environment of 25°C at a charge/discharge rate of 1C/1C within a SOC range of 0% to 100% before and after the storage test at 55°C and before and after the cycle test at 70°C. The discharge capacity was measured upon discharging. The capacity retention ratio was obtained by dividing the discharge capacity after the test by the discharge capacity before the test: capacity retention

```
ratio [%] = (discharge capacity after test / discharge
capacity before test) × 100%.
```

The AC resistance increase ratio was obtained as follows. The AC measurement was performed as described above, before and after the respective tests. The increase value of the AC resistance after the test with respect to the AC resistance before the test was divided by the AC resistance before the test to yield the AC resistance increase ratio: AC resistance increase ratio [%] = [(AC resistance after test - AC resistance before test) / AC resistance before test] $\times$ 100%.

The amount of gas generated was obtained as follows. The battery volume before the test and the battery volume after the test were measured by the Archimedes method, and the difference between them was taken as the amount of gas generated. The amount of gas generated was normalized by the 0.2 C capacity of the battery (unit: ccAh$^{-1}$).

The evaluation results of each battery are shown in Tables 3 and 4 below. Specifically, the tables summarize the AC resistance after aging, and each of the capacity retention ratio, the AC resistance increase ratio, and the amount of gas generated in the 55°C storage test and the 70°C cycle test.

[Table 3]

| | AC Resistance after Aging /mΩ | 55°C Storage Test | | | 70°C Cycle Test | | |
|---|---|---|---|---|---|---|---|
| | | Capacity Retention Ratio /% | AC Resistance Increase Ratio /% | Amount of Gas Generated / ccAh$^{-1}$ | Capacity Retention Ratio /% | AC Resistance Increase Ratio /% | Amount of Gas Generated / ccAh$^{-1}$ |
| Example 1 | 17 | 95 | 25 | 0.58 | 76 | 58 | 6.2 |
| Example 2 | 13 | 97 | 12 | 0.33 | 79 | 32 | 4.8 |
| Example 3 | 13.5 | 98 | 10 | 0.2 | 81 | 30 | 3.5 |
| Example 4 | 13.8 | 99 | 8 | 0.15 | 82 | 25 | 2.8 |

(continued)

| | AC Resistance after Aging /mΩ | 55°C Storage Test | | | 70°C Cycle Test | | |
|---|---|---|---|---|---|---|---|
| | | Capacity Retention Ratio /% | AC Resistance Increase Ratio /% | Amount of Gas Generated / ccAh$^{-1}$ | Capacity Retention Ratio /% | AC Resistance Increase Ratio /% | Amount of Gas Generated / ccAh$^{-1}$ |
| Example 5 | 14 | 99 | 5 | <0.1 | 83 | 21 | 2.2 |
| Example 6 | 15 | 98 | 5.5 | <0.1 | 82 | 24 | 2.5 |
| Example 7 | 12 | 95 | 26 | 0.5 | 79 | 31 | 5 |
| Example 8 | 13 | 97 | 12 | 0.38 | 80 | 31 | 3.5 |
| Example 9 | 14 | 99 | 8.5 | 0.2 | 82 | 27 | 3 |
| Example 10 | 15 | 99 | 5 | <0.1 | 84 | 22 | 2.2 |
| Example 11 | 13 | 97 | 12 | 0.4 | 81 | 32 | 3.5 |

Table 4

| | AC Resistance after Aging /mΩ | 55°C Storage Test | | | 70°C Cycle Test | | |
|---|---|---|---|---|---|---|---|
| | | Capacity Retention Ratio /% | AC Resistance Increase Ratio /% | Amount of Gas Generated / ccAh$^{-1}$ | Capacity Retention Ratio /% | AC Resistance Increase Ratio /% | Amount of Gas Generated / ccAh$^{-1}$ |
| Example 12 | 15 | 98 | 5.4 | <0.1 | 82 | 23 | 2.5 |
| Example 13 | 17 | 98 | 4 | <0.1 | 80 | 24 | 2 |
| Example 14 | 13 | 99 | 5 | <0.1 | 85 | 27 | 2 |
| Example 15 | 14 | 99 | 3 | <0.1 | 88 | 20 | 1.5 |
| Comparative Example 1 | 12 | 88 | 52 | 5 | 65 | 105 | <15 |
| Comparative Example 2 | 58 | 92 | 180 | <15 | 95 | 480 | 1.96 |
| Comparative Example 3 | 31 | 82 | 380 | 0.25 | 32 | 650 | <15 |
| Comparative Example 4 | 12 | 82 | 58 | 6.2 | 65 | 106 | <15 |
| Comparative Example 5 | 12 | 80 | 42 | 6.8 | 65 | 95 | <15 |
| Comparative Example 6 | 19 | 85 | 210 | 0.22 | 92 | 98 | 1.88 |
| Comparative Example 7 | 25 | 82 | 180 | 0.22 | 95 | 95 | 1.82 |
| Comparative Example 8 | 40 | 80 | 420 | 0.25 | 48 | 750 | <15 |

In all of the batteries produced in Examples 1 to 15, the AC resistance was low, and a decrease in capacity, an increase in resistance, and the amount of gas generated in the high-temperature storage and charge-discharge cycle were suppressed to be low. In contrast, in the batteries produced in Comparative Examples 1 to 8, the amount of increase in resistance was greater and the decrease in capacity during storage was greater in both of the high-temperature tests. The amount of gas generated for the batteries of Comparative Examples 1 to 5 was greater than the amount of gas generated in Examples 1 to 15 in either the storage test or the cycle test.

As shown by the evaluation results of the secondary batteries produced in each of the Examples, the secondary battery having high output performance and suppressed performance degradation during repeated charge-and-discharge cycles can be produced by the production method described in the first approach.

According to at least one approach and example described above, a method for producing a secondary battery is provided. The method includes a step of preparing a secondary battery precursor including a positive electrode, a negative electrode, and an electrolyte; a step of providing a potential adjusted state by adjusting a negative electrode potential; and a step of holding the secondary battery precursor in the potential adjusted state at a temperature exceeding 60°C and 80°C or less. In the step of providing the potential adjusted state, the negative electrode is adjusted to a potential of 0.6 V (vs. Li/Li$^+$) to 1.5 V (vs. Li/Li$^+$) with respect to an oxidation-reduction potential of lithium as standard. According to the above, a method for producing a highly-durable secondary battery that exhibits high output performance, for which there is little performance degradation even when charge-and-discharge cycles are repeated, and this secondary battery are provided.

While certain arrangements have been described, these arrangements have been presented by way of example only, and are not intended to limit the scope of the inventions. Indeed, the production method, secondary batteries produced by the method, battery packs, vehicles, and stationary power supplies described herein may be embodied in a variety of other forms; furthermore various omissions, substitutions and changes in the form of the apparatuses described herein may be made.

The present disclosure also encompasses the following approaches relevant to a secondary battery:

1. A production method of a secondary battery, the method comprising:

preparing a secondary battery precursor comprising a positive electrode, a negative electrode, and an electrolyte;
adjusting a negative electrode potential of the negative electrode to a range of 0.6 V or more and less than 1.5 V based on oxidation-reduction potential of lithium, thereby providing a potential adjusted state; and
holding the potential adjusted state at a temperature in a range of greater than 60°C and 82°C or less.

2. The method according to clause 1, wherein holding the potential adjusted state is performed for 3 hours or more.

3. The method according to clause 1 or 2, wherein the negative electrode comprises, as a binder, one or more selected from the group consisting of styrene-butadiene rubber, carboxymethyl cellulose, salts of carboxymethyl cellulose, polyacrylic acid, a polymer of polyacrylic acid, and acrylic rubber.

4. The method according to any one of clauses 1 to 3, wherein the negative electrode (3) comprises, as a negative electrode active material, one or more niobium-containing oxides selected from the group consisting of a monoclinic niobium-titanium composite oxide, a titanium-niobium oxide of an orthorhombic structure, and a niobium composite oxide.

5. The method according to any one of clauses 1 to 4, wherein in the potential adjusted state, a positive electrode potential of the positive electrode (5) is adjusted to a range exceeding 3.9 V based on oxidation-reduction potential of lithium.

6. The method according to clause 5, wherein the positive electrode (5) comprises, as a positive electrode active material, one or more selected from the group consisting of a lithium manganese composite oxide having a spinel structure, a lithium nickel composite oxide, a lithium cobalt composite oxide, a lithium nickel cobalt composite oxide, a lithium manganese nickel composite oxide having a spinel structure, a lithium manganese cobalt composite oxide, a lithium iron phosphate, and a lithium nickel cobalt manganese composite oxide.

7. The method according to any one of clauses 1 to 6, wherein a voltage difference before and after holding the potential adjusted state is 100 mV or more and 300 mV or less.

8. The method according to any one of clauses 1 to 7, wherein the electrolyte further comprises one or more selected from the group consisting of lithium bis(trifluoromethanesulfonyl) imide, lithium bis(fluorosulfonyl) imide, lithium difluorophosphate, lithium difluorooxalate borate, lithium bisoxalate borate, and lithium triflate.

9. A secondary battery produced by the production method according to any one of clauses 1 to 8.

10. A battery pack comprising the secondary battery according to clause 9.

11. The battery pack according to clause 10, further comprising:

an external power distribution terminal; and
a protective circuit.

12. The battery pack according to clause 10 or 11, comprising plural of the secondary battery, the secondary batteries being electrically connected in series, in parallel, or in combination of in-series connection and in-parallel connection.

13. A vehicle comprising the battery pack according to any one of clauses 10 to 12.

14. The vehicle according to clause 13, wherein the vehicle comprises a mechanism configured to convert kinetic energy of the vehicle into regenerative energy.

**Claims**

1. A production method of a secondary battery, the method comprising:

   preparing a secondary battery precursor (100) comprising a positive electrode (5), a negative electrode (3), and an electrolyte;
   adjusting a negative electrode potential of the negative electrode (3) to a range of 0.6 V or more and less than 1.5 V based on oxidation-reduction potential of lithium, thereby providing a potential adjusted state; and
   holding the potential adjusted state at a temperature in a range of greater than 60°C and 82°C or less.

2. The method according to claim 1, wherein holding the potential adjusted state is performed for 3 hours or more.

3. The method according to claim 1 or 2, wherein the negative electrode (3) comprises, as a binder, one or more selected from the group consisting of styrene-butadiene rubber, carboxymethyl cellulose, salts of carboxymethyl cellulose, polyacrylic acid, a polymer of polyacrylic acid, and acrylic rubber.

4. The method according to any one of claims 1 to 3, wherein the negative electrode (3) comprises, as a negative electrode active material, one or more niobium-containing oxides selected from the group consisting of a monoclinic niobium-titanium composite oxide, a titanium-niobium oxide of an orthorhombic structure, and a niobium composite oxide.

5. The method according to any one of claims 1 to 4, wherein in the potential adjusted state, a positive electrode potential of the positive electrode (5) is adjusted to a range exceeding 3.9 V based on oxidation-reduction potential of lithium.

6. The method according to claim 5, wherein the positive electrode (5) comprises, as a positive electrode active material, one or more selected from the group consisting of a lithium manganese composite oxide having a spinel structure, a lithium nickel composite oxide, a lithium cobalt composite oxide, a lithium nickel cobalt composite oxide, a lithium manganese nickel composite oxide having a spinel structure, a lithium manganese cobalt composite oxide, a lithium iron phosphate, and a lithium nickel cobalt manganese composite oxide.

7. The method according to any one of claims 1 to 6, wherein a voltage difference before and after holding the potential adjusted state is 100 mV or more and 300 mV or less.

8. The method according to any one of claims 1 to 7, wherein the electrolyte further comprises one or more selected from the group consisting of lithium bis(trifluoromethanesulfonyl)imide, lithium bis(fluorosulfonyl)imide, lithium difluorophosphate, lithium difluorooxalate borate, lithium bisoxalate borate, and lithium triflate.

9. A secondary battery produced by the production method according to any one of claims 1 to 8.

10. A battery pack (300) comprising the secondary battery according to claim 9.

11. The battery pack (300) according to claim 10, further comprising:

    an external power distribution terminal (350); and
    a protective circuit (346).

12. The battery pack (300) according to claim 10 or 11, comprising plural of the secondary battery, the secondary batteries being electrically connected in series, in parallel, or in combination of in-series connection and in-parallel connection.

13. A vehicle (400) comprising the battery pack (300) according to any one of claims 10 to 12.

14. The vehicle (400) according to claim 13, wherein the vehicle (400) comprises a mechanism configured to convert kinetic energy of the vehicle (400) into regenerative energy.

F I G. 1

F I G. 2

F I G. 3

F I G. 4

F I G. 5

F I G. 6

F I G. 7

300

32

33

24    200

33

23

35

34    343

346

35

22

342

350

31

F I G . 8

F I G. 9

F I G. 10

F I G. 11

Europäisches
Patentamt
European
Patent Office
Office européen
des brevets

# EUROPEAN SEARCH REPORT

**Application Number**

EP 24 15 9345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/288306 A1 (FUKAYA TARO [JP] ET AL) 16 September 2021 (2021-09-16) * paragraphs [0019] - [0021], [0023], [0028], [0045], [0046], [0083], [0085], [0098] - [0100], [0105], [0118] - [0124], [0232] - [0234] * * paragraphs [0240], [0244], [0248], [0258] * | 1-14 | INV. H01M4/04 H01M4/131 H01M4/1391 H01M4/485 H01M4/62 H01M10/0525 H01M10/0567 H01M10/44 |
| X | US 2022/352542 A1 (KOITABASHI YUIKO [JP] ET AL) 3 November 2022 (2022-11-03) * paragraphs [0013], [0016] - [0018], [0021], [0034], [0035], [0038], [0039], [0180] * | 1-14 | |
| X | US 2022/344655 A1 (YAMADA ARISA [JP] ET AL) 27 October 2022 (2022-10-27) * paragraphs [0018], [0021], [0173] * | 9-14 | |

**TECHNICAL FIELDS SEARCHED (IPC)**

H01M

The present search report has been drawn up for all claims

| Place of search | Date of completion of the search | Examiner |
|---|---|---|
| Munich | 1 August 2024 | Möller, Claudia |

## ANNEX TO THE EUROPEAN SEARCH REPORT
## ON EUROPEAN PATENT APPLICATION NO.

EP 24 15 9345

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2024

| Patent document cited in search report | Publication date | Patent family member(s) | | Publication date |
|---|---|---|---|---|
| US 2021288306 A1 | 16-09-2021 | CN | 113394374 A | 14-09-2021 |
| | | EP | 3879596 A1 | 15-09-2021 |
| | | JP | 2021144819 A | 24-09-2021 |
| | | US | 2021288306 A1 | 16-09-2021 |
| US 2022352542 A1 | 03-11-2022 | CN | 115249843 A | 28-10-2022 |
| | | JP | 7504832 B2 | 24-06-2024 |
| | | JP | 2022169208 A | 09-11-2022 |
| | | US | 2022352542 A1 | 03-11-2022 |
| US 2022344655 A1 | 27-10-2022 | CN | 115249845 A | 28-10-2022 |
| | | JP | 7434209 B2 | 20-02-2024 |
| | | JP | 2022169205 A | 09-11-2022 |
| | | US | 2022344655 A1 | 27-10-2022 |

EPO FORM P0459

For more details about this annex : see Official Journal of the European Patent Office, No. 12/82